# EUROPEAN PATENT APPLICATION

(11) **EP 2 388 888 A2**
(43) Date of publication of application: **23.11.2011**
(21) Application number: 11156823.4
(22) Date of filing: 03.03.2011
(51) Int. Cl.: H02K 1/14, H02K 15/02, H02K 7/18

(54) **Rotating electrical machine, manufacturing method of rotating electrical machine and wind power generator system**

(30) Priority: 19.05.2010 JP 2010115144; 30.07.2010 JP 2010171781
(71) Applicant: Kabushiki Kaisha Yaskawa Denki, Kitakyushu-shi, Fukuoka 806-0004 (JP)
(72) Inventor: Asanuma, Naoki, Kitakyushu-Shi Fukuoka 806-0004 (JP); Miyamoto, Yasuhiro, Kitakyushu-Shi Fukuoka 806-0004 (JP)
(74) Representative: Gendron, Vincent Christian

(57) **Abstract**

A rotating electrical machine according to the present embodiments includes a rotor (1) and a stator (2) that surrounds the rotor (1). The stator (2) includes: a yoke core (21) that is obtained by bending band-shaped non-directional magnetic steel sheets (31) in a circular shape and stacking the bent band-shaped non-directional magnetic steel sheets (31); and plural teeth cores (22) that are arranged in a peripheral direction of the yoke core (21), with one ends of the teeth cores (22) fixed to an internal peripheral side of the yoke core, and with the other ends of the teeth cores (22) set opposite to the rotor (1). The teeth cores (22) are configured by stacking directional magnetic steel sheets (4), and the teeth cores (22) are independent of each other.

## Description

### FIELD

The embodiments discussed herein relates to a rotating electrical machine, a manufacturing method of a rotating electrical machine, and a wind power generator system.

### BACKGROUND

A technique of using a directional magnetic steel sheet for a stator core of a rotating electrical machine has been conventionally known (see, for example, Japanese Patent Laid-open Publication No. H10-234159).

According to this conventional technique, a stator core of a stator is configured by a yoke core and a teeth member. The yoke core is configured by bending in circular shape band-shaped steel sheets punched out from a directional magnetic steel sheet and by stacking the bent band-shaped steel sheets. Plural notches are formed on the band-shaped steel sheets. To suppress reduction of efficiency due to magnetostriction, the band-shaped steel sheets are bent at notch portions. Plural engaging trenches are formed by the notches on the yoke core. An easy direction of magnetization of the yoke core coincides with a peripheral direction of the yoke core. The teeth member is configured by punching out from a directional magnetic steel sheet, band-shaped steel sheets that have a shape corresponding to plural teeth cores connected together at bridge parts, bending the band-shaped steel sheets in a circular shape, and stacking the bent band-shaped steel sheets. To suppress reduction of efficiency due to magnetostriction, the band-shaped steel sheets used for the teeth member are bent at portions corresponding to the bridge parts. The band-shaped steel sheets used for the teeth member are punched out from a directional magnetic steel sheet in a direction perpendicular to an easy direction of magnetization of the directional magnetic steel sheet. An easy direction of magnetization of each teeth core coincides with a radial direction of the teeth member.

After providing windings on the teeth cores configured as described above, one ends of the teeth cores at an opposite side of the bridge parts are engaged with the engaging trenches of the yoke core, thereby completing the stator.

According to the conventional rotating electrical machine described above, the band-shaped steel sheets for the yoke core are bent at notch portions, and the band-shaped steel sheets for the teeth member are bent at portions corresponding to the bridge parts, thereby suppressing reduction of efficiency due to magnetostriction. However, the notch portions and the portions corresponding to the bridge parts remain generating magnetostriction, and efficiency becomes poor due to this magnetostriction. Consequently, there is a problem that efficiency becomes poor despite increased cost of its material by using directional magnetic steel sheets for the yoke core and the teeth member.

An object of an aspect of the embodiment is to provide a rotating electrical machine that can suppress increase of its material cost and can obtain desired efficiency, a manufacturing method of a rotating electrical machine, and a wind power generator system.

### SUMMARY

The rotating electrical machine according to an aspect of an aspect of the embodiment includes a rotor and a stator that surrounds the rotor. The stator includes: a yoke core that is obtained by bending band-shaped non-directional magnetic steel sheets in a circular shape and by stacking the bent band-shaped non-directional magnetic steel sheets, or is obtained by bending a band-shaped non-directional magnetic steel sheet in a circular spiral shape; and plural teeth cores that are arranged in a peripheral direction of the yoke core, with one ends of the teeth cores fixed to an internal peripheral side of the yoke core, and with the other ends of the teeth cores set opposite to the rotor. The teeth cores are configured by a member obtained by stacking directional magnetic steel sheets.

According to another aspect of an aspect of the embodiment, because the yoke core is configured by using non-directional magnetic steel sheets, increase of its material cost can be suppressed. Because the yoke core is configured by using non-directional magnetic steel sheets, no magnetostriction occurs even when the non-directional magnetic steel sheets are bent in a circular shape and stacked. Because the teeth cores are independent of each other and because no bridge part is present, magnetostriction at bridge parts does not occur. As explained above, according to the rotating electrical machine of an aspect of the embodiment, desired efficiency can be obtained while suppressing increase of its material cost. Because the yoke core is configured by bending the band-shaped non-directional magnetic steel sheets in a circular shape and by stacking the bent band-shaped non-directional magnetic steel sheets, yield is better than that when circular non-directional magnetic steel sheets are stacked.

### BRIEF DESCRIPTION OF DRAWINGS

FIG. 1 is a cross-sectional view of a rotating electrical machine according to a first embodiment of;
FIG. 2 depicts a state of punching out band-shaped steel sheets constituting a yoke core from a non-directional magnetic steel sheet;
FIG. 3 is a perspective view of a yoke core;
FIG. 4 depicts a state of punching out teeth steel sheets constituting teeth cores from a directional magnetic steel sheet;
FIG. 5 is a perspective view of a teeth core;
FIG. 6 depicts a part of a manufacturing process of a rotating electrical machine shown in FIG. 1;
FIG. 7 depicts a part of a manufacturing process of a rotating electrical machine according to a second embodiment;
FIG. 8 depicts another shape of a tool shown in FIG. 7;
FIG. 9 depicts an outline of a wind power generator system including a speed increasing gear and a power generator; and
FIG. 10 depicts an outline of a direct-drive wind power generator system from which a speed increasing gear is omitted.

### DESCRIPTION OF EMBODIMENTS

Exemplary embodiments will be explained below in detail with reference to the accompanying drawings. Like constituent elements are denoted by like reference numerals and redundant explanations thereof will be omitted.

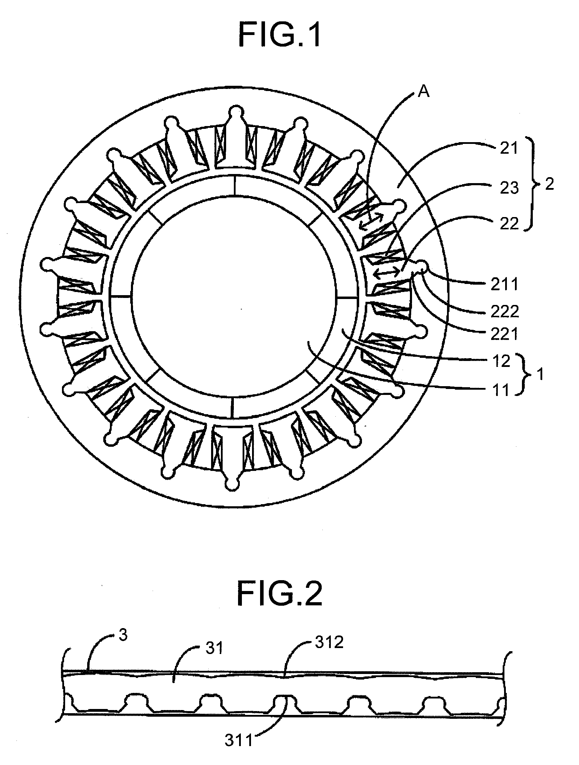

A configuration of a rotating electrical machine according to a first embodiment is explained first. FIG. 1 is a cross-sectional view of the rotating electrical machine according to the first embodiment. FIG. 1 is a cross section when the rotating electrical machine is cut in a direction perpendicular to a rotation axis direction of a rotor. In FIG. 1, the rotating electrical machine includes a rotor 1 and a stator 2.

The rotor 1 is in a cylindrical shape, and an external periphery of the rotor 1 is surrounded by the stator 2 via a space. The rotor 1 includes a rotor core 11 and a permanent magnet 12. The permanent magnet 12 is provided on an external periphery of the rotor core 11. A structure of the rotor 1 is not limited to a structure shown in FIG. 1. The rotor 1 can have a structure that the permanent magnet 12 is provided within the rotor core 11, or a structure that does not use the permanent magnet 12.

The stator 2 includes a stator core having a yoke core 21 and plural teeth cores 22, and windings 23.

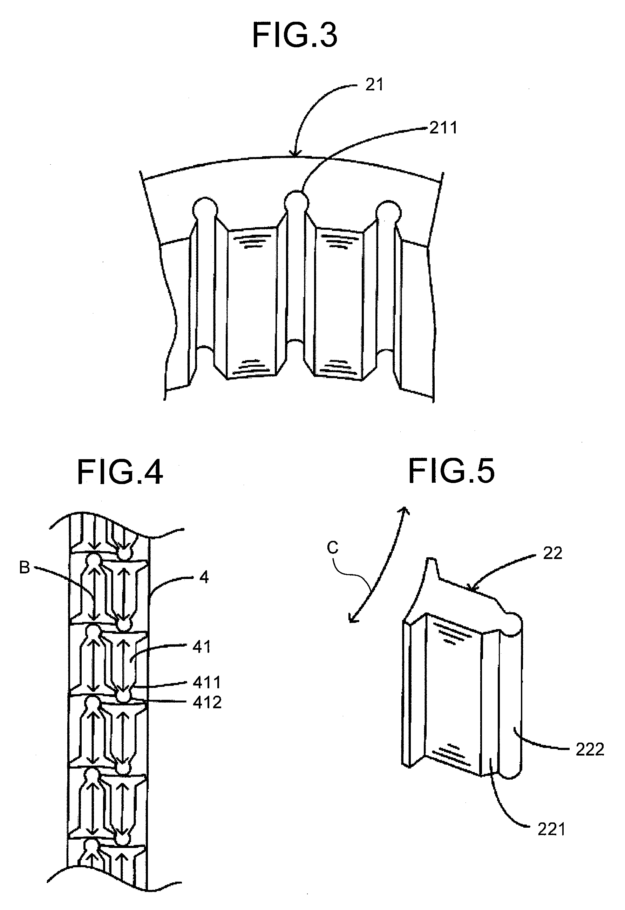

The yoke core 21 is configured by punching out band-shaped steel sheets 31 from a non-directional magnetic steel sheet 3 as shown in FIG. 2, bending the band-shaped steel sheets 31in a circular shape, and by stacking the bent band-shaped steel sheets 31. Specifically, the yoke core 21 is configured by separately preparing plural one-layer band-shaped steel sheets 31 that are bent in a circular shape, and by stacking the one-layer band-shaped steel sheets 31, or is configured by bending a band-shaped steel sheet 31 in a circular spiral shape having plural circuits and by stacking the plural circuits. FIG. 2 depicts a state of punching out the band-shaped steel sheets 31 constituting the yoke core 21 from the non-directional magnetic steel sheet 3. As shown in FIG. 2, the band-shaped steel sheets 31 are formed with plural notches 311. Concave portions 312 are formed at positions corresponding to the notches 311. The band-shaped steel sheets 31 are bent in a circular shape by arranging at an internal peripheral side a side on which the notches 311 are formed. Accordingly, as shown in FIG. 1, the notches 311 form plural engaging trenches 211 that are provided at an internal peripheral side of the yoke core 21. The engaging trenches 211 are provided to match a number of the teeth cores 22. The engaging trenches 211 have a shape in which the engaging trenches 211 can be engaged with one ends of the teeth cores 22 described later, as shown in FIG. 3. FIG. 3 is a perspective view of the yoke core 21 and depicts only a part of the yoke core 21. The notches 311 are formed such that the engaging trenches 211 have a shape as shown in FIG. 3 when the band-shaped steel sheets 31 are bent in a circular shape and stacked. The concave portions 312 have a shape in which an external periphery of the band-shaped steel sheets 31 (that is, an external periphery of the yoke core 21) can be formed in a circular shape when the band-shaped steel sheets 31 are bent in a circular shape and stacked.

The teeth cores 22 are independent of each other and are arranged in a peripheral direction of the yoke core 21 as shown in FIG. 1. The one ends of the teeth cores 22 are fixedly engaged with the engaging trenches 211 that are formed at an internal peripheral side of the yoke core 21, and the other ends face the rotor 1. The teeth cores 22 are configured by using a directional magnetic steel sheet. An easy direction of magnetization of each teeth core 22 coincides with a radial direction of the yoke core 21 as shown by an arrow A in FIG. 1. With this arrangement, a direction of a magnetic flux that flows in each teeth core 22 can be matched with the easy direction of magnetization of each teeth core 22.

The teeth cores 22 are configured by stacking teeth steel sheets 41 that are punched out from a directional magnetic steel sheet 4 as shown in FIG. 4. FIG. 4 depicts a state of punching out the teeth steel sheets 41 constituting the teeth cores 22 from the directional magnetic steel sheet 4. The teeth steel sheets 41 are sequentially punched out along an easy direction of magnetization of the directional magnetic steel sheet 4 shown by an arrow B. Tapered parts 411 and circular parts 412 are formed at one ends of the teeth steel sheets 41. The tapered parts 411 have a shape in which their widths become smaller toward front ends of the one ends. The tapered parts 411 have a shape in which peripheral direction widths become smaller from an internal peripheral surface of the yoke core 21 toward the yoke core 21 as shown in FIG. 1. The circular parts 412 are provided at front ends of the tapered parts 411 where widths of the tapered parts 411 become small. Widths of the circular parts 412 are larger than the widths of the front ends of the tapered parts 411.

By stacking the teeth steel sheets 41 that are configured as described above, a tapered part 221 and a cylindrical part 222 are formed at one end of each of the teeth cores 22 as shown in FIG. 5. FIG. 5 is a perspective view of the teeth core 22. As shown in FIG. 5, the tapered part 221 has a shape in which a width of a peripheral direction shown by an arrow C becomes small toward a front end of one end (that is, at a yoke core 21 side). The cylindrical part 222 is formed at a front end side of the tapered part 221 (that is, a yoke core 21 side). A width of each cylindrical part 222 in a peripheral direction shown by the arrow C is larger than the width of the front end of the tapered part 221 in a peripheral direction. The tapered parts 221 are formed by stacking the tapered parts 411 shown in FIG. 4. The cylindrical parts 222 are formed by stacking the circular parts 412 shown in FIG. 4. As shown in FIGS. 3 and 5, one ends of the teeth cores 22 and the engaging trenches 211 of the yoke core 21 have shapes in which the one ends of the teeth cores 22 and the engaging trenches 211 can be engaged together.

The windings 23 are provided on the teeth cores 22. The rotor 1 is rotated by a rotating magnetic field that is generated by the windings 23. A winding method of the windings 23 can be a concentrated winding method or a distributed winding method.

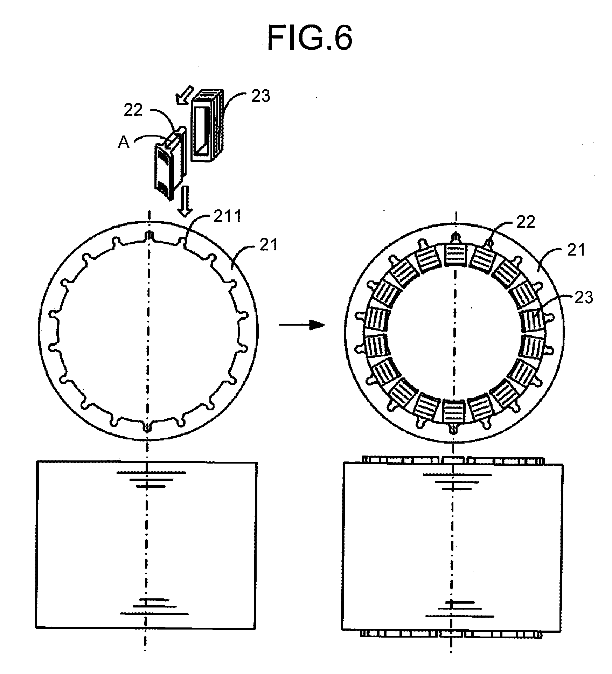

A manufacturing method of the rotating electrical machine shown in FIG. 1 is explained next. FIG. 6 depicts a part of a manufacturing process of the rotating electrical machine shown in FIG. 1. In FIG. 6, a plan view from an axial direction of the stator 2 and a side view are shown for each process.

According to the manufacturing method of the rotating electrical machine, first, the band-shaped steel sheets 31 are punched out from the non-directional magnetic steel sheet 3 (FIG. 2), and the band-shaped steel sheets 31 are bent in a circular shape and are stacked, thereby forming the yoke core 21 (FIGS. 3 and 6). Further, the teeth steel sheets 41 are punched out from the directional magnetic steel sheet 4 (FIG. 4), and the teeth steel sheets 41 are stacked to form one teeth core 22. This operation is repeated to form plural mutually independent teeth cores 22 (FIGS. 5 and 6).

Next, as shown in FIG. 6, the windings 23 are inserted into the teeth cores 22, and one ends of the teeth cores 22 are inserted into the engaging trenches 211 by shrink fitting. The one ends of the teeth cores 22 are inserted into the yoke core 21 from one end surface of the yoke core 21 in a stacking direction. At this time, an easy direction of magnetization A of each teeth core 22 is matched with a radial direction of the yoke core 21. Based on the above, the one ends of the teeth cores 22 are fixed to an internal peripheral side of the yoke core 21, and the stator 2 is completed.

In the example shown in FIG. 6, the windings 23 are inserted into the teeth cores 22 before the one ends of the teeth cores 22 are inserted into the engaging trenches 211. However, the method is not limited to this example. In the manufacturing method of the rotating electrical machine, the teeth cores 22 can be also provided after the one ends of the teeth cores 22 are inserted into the engaging trenches 211.

As described above, in the first embodiment, the yoke core 21 is configured by using the non-directional magnetic steel sheet 3. Consequently, increase of the material cost can be suppressed. The teeth cores 22 are configured by using the directional magnetic steel sheet 4. An easy direction of magnetization of each teeth core 22 coincides with a direction of a magnetic flux that flows in each teeth core 22. Therefore, according to the first embodiment, iron loss becomes small, magnetic flux densities can be increased by the same input, torque linearity is improved, and high torques can be achieved. Consequently, in the first embodiment, efficiency can be improved. Further, in the first embodiment, because the yoke core 21 is configured by using the non-directional magnetic steel sheet 3, no magnetostriction occurs even when the band-shaped steel sheets 31 that are punched out from the non-directional magnetic steel sheet 3 are bent in a circular shape and are stacked. According to the first embodiment, the teeth cores 22 are independent of each other, and bridge parts explained in the above description of the conventional technique are not present on the teeth cores 22. Therefore, magnetostriction at bridge parts does not occur. As explained above, according to the rotating electrical machine of the first embodiment, desired efficiency can be obtained while suppressing increase of its material cost.

According to the first embodiment, the yoke core 21 is configured by bending in a circular shape the band-shaped steel sheets 31 that are punched out from the non-directional magnetic steel sheet 3 and by stacking the bent band-shaped steel sheets 31. Therefore, in the first embodiment, unused steel sheets can be reduced and yield can be improved as compared with a case where circular non-directional magnetic steel sheets are stacked.

In the first embodiment, because the teeth cores 22 are independent of each other (that is, because the teeth cores 22 are not connected at bridge parts), the teeth steel sheets 41 constituting the teeth cores 22 can be sequentially punched out along with an easy direction of magnetization of the directional magnetic steel sheet 4. A directional magnetic steel sheet has a general characteristic that an easy direction of magnetization of the directional magnetic steel sheet is arranged in only a rolling direction. Therefore, it is difficult to increase a width of the directional magnetic steel sheet (a width perpendicular to an easy direction of magnetization). According to the conventional technique described above, because the teeth cores are connected to each other at bridge parts, band-shaped steel sheets need to be used. In this case, to match an easy direction of magnetization of each teeth core with a radial direction of the yoke core, a longitudinal direction of each band-shaped steel sheet needs to be set in a direction perpendicular to an easy direction of magnetization of the directional magnetic steel sheet. Therefore, according to the conventional technique, it is difficult to manufacture a large rotating electrical machine that has a large length in a longitudinal direction of the band-shaped steel sheets. On the other hand, according to the first embodiment, the teeth steel sheets 41 can be sequentially punched out along an easy direction of magnetization of the directional magnetic steel sheet 4. Consequently, in the first embodiment, even a large rotating electrical machine can be easily manufactured.

According to the first embodiment, the cylindrical parts 222 that have larger widths in a peripheral direction than those of the front ends of the tapered parts 221 are formed at one ends of the teeth cores 22. Accordingly, in the first embodiment, the teeth cores 22 can be prevented from being extracted from the yoke core 21. According to the first embodiment, the yoke core 21 is formed with the engaging trenches 211 that have shapes in which the engaging trenches 211 can be engaged with the cylindrical parts 222. The band-shaped steel sheets 31 constituting the yoke core 21 are formed with the notches 311 corresponding to the engaging trenches 211. That is, according to the first embodiment, as shown in FIG. 3, a concave portion 312 side of the notches 311 becomes in approximately an elliptical shape. Accordingly, in the first embodiment, stress concentrated at the notches 311 at the time of bending the band-shaped steel sheets 31 in a circular shape and stacking the band-shaped steel sheets 31 can be relaxed.

According to the first embodiment, the teeth cores 22 are independent of each other. Therefore, when external force in a peripheral direction acts on the teeth cores 22, there is a risk that one ends of the teeth cores 22 are deformed. On the other hand, according to the first embodiment, the cylindrical parts 222 are formed at the one ends of the teeth cores 22. The external force that acts on the cylindrical parts 222 is dispersed based on the shape of the cylindrical parts 222 as compared with external force that is applied when the teeth cores 22 do not have a cylindrical shape. As a result, according to the first embodiment, deformation of the one ends of the teeth cores 22 can be suppressed. According to the first embodiment, a contact area between the one ends of the teeth cores 22 and the engaging trenches 211 increases by forming the tapered parts 221 on the one ends of the teeth cores 22. As a result, the external force that acts on the one ends of the teeth cores 22 is dispersed to the cylindrical parts 222 and the engaging trenches 211. Consequently, deformation of the one ends of the teeth cores 22 can be further suppressed.

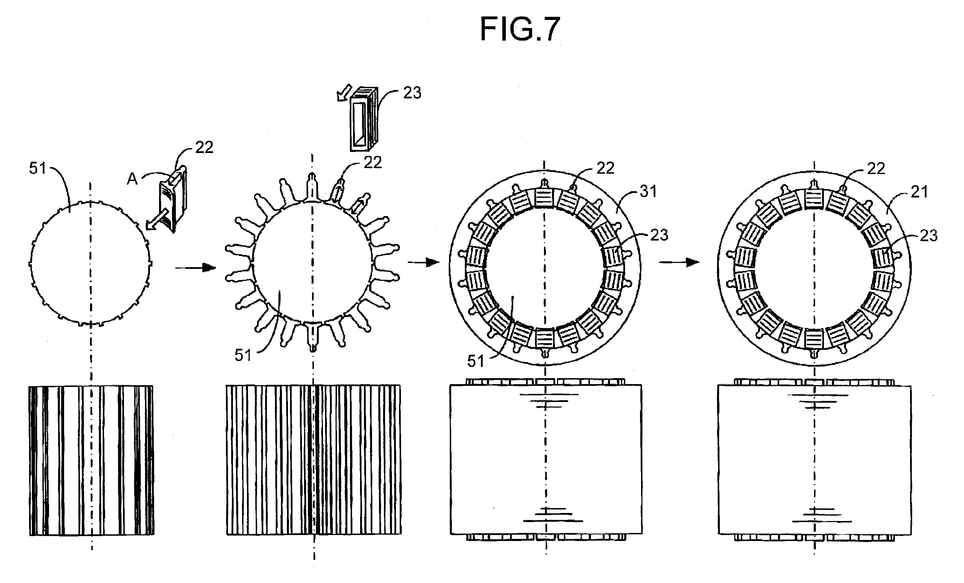

In a second embodiment, a manufacturing method of a rotating electrical machine that is different from the method according to the first embodiment is explained. FIG. 7 depicts a part of a manufacturing process of a rotating electrical machine according to the second embodiment. In FIG. 7, a plan view from an axial direction of the stator 2 and a side view are shown for each process. The configuration of the rotating electrical machine according to the second embodiment are identical to that shown in FIG. 1, and thus detailed explanations thereof will be omitted.

According to the manufacturing method of the rotating electrical machine in the second embodiment, the teeth steel sheets 41 are first punched out from the directional magnetic steel sheet 4 (FIG. 4), and the teeth steel sheets 41 are stacked to form one teeth core 22. This process is repeated to form plural teeth cores 22 that are independent of each other (FIGS. 5 and 7).

Next, as shown in FIG. 7, a tool 51 having a cylindrical or columnar shape that is provided with projections at an external peripheral side is prepared. The other ends of the teeth cores 22 are engaged with the projections of the tool 51, thereby fixing the other ends of the teeth cores 22 to the external periphery of the tool 51. At this time, in the manufacturing method of the rotating electrical machine, an easy direction of magnetization A of each teeth core 22 is matched with a radial direction of the tool 51.

Next, as shown in FIG. 7, according to the manufacturing method of the rotating electrical machine, the windings 23 are inserted into the teeth cores 22.

Subsequently, the band-shaped steel sheets 31 are punched out from the non-directional magnetic steel sheet 3 (FIG. 2). Thereafter, as shown in FIG. 7, the band-shaped steel sheets 31 are bent in a circular shape and are stacked while engaging the notches 311 of the band-shaped steel sheets 31 with one ends of the teeth cores 22 and fixing the notches 311, thereby forming the yoke core 21. Thereafter, the tool 51 is extracted from the teeth cores 22, thereby completing the stator 2.

In the example shown in FIG. 7, the windings 23 are provided on the teeth cores 22 after the teeth cores 22 are provided on the external periphery of the tool 51. However, the method is not limited to this example. The windings 23 can be provided on the teeth cores 22 after the tool 51 is extracted from the teeth cores 22 after forming the yoke core 21.

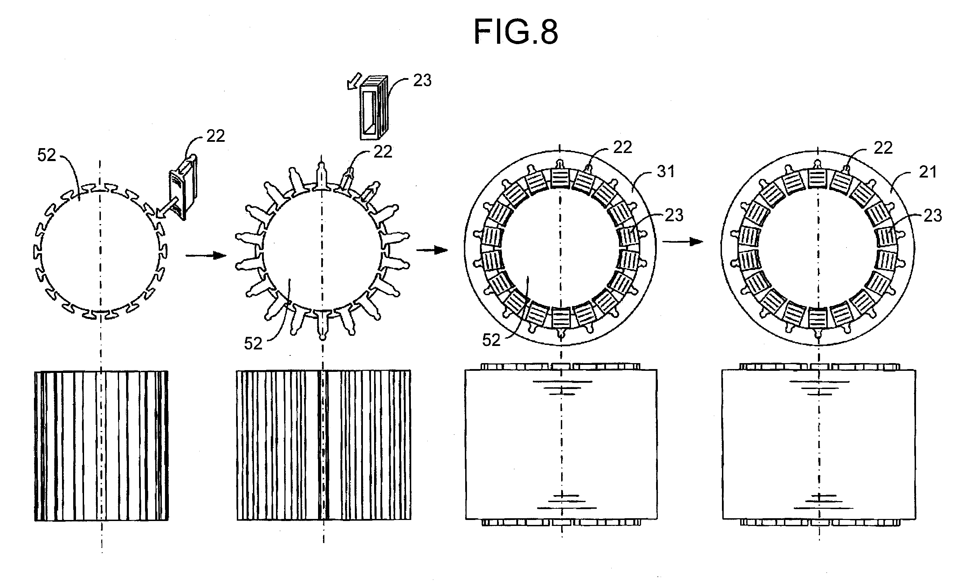

The shape of the tool 51 is not limited to that shown in FIG. 7. For example, the tool 51 can be a tool 52 having a shape shown in FIG. 8. FIG. 8 depicts another shape of the tool 51. In FIG. 8, a plan view from an axial direction of the stator 2 and a side view are shown for each process. As shown in FIG. 8, projections of the tool 52 are configured such that front ends of the projections are expanded in a peripheral direction and the front ends can securely hold the other ends of the teeth cores 22.

In FIG. 8, the teeth steel sheets 41 are punched out from the directional magnetic steel sheet 4 (FIG. 4), and the teeth steel sheets 41 are stacked to form one teeth core 22. This process is repeated to form plural teeth cores 22 that are independent of each other (FIGS. 5 and 8).

As shown in FIG. 8, according to the manufacturing method of the rotating electrical machine, the tool 52 having a cylindrical or columnar shape that is provided with projections of which front ends are expanded in a peripheral direction is prepared. According to the manufacturing method of the rotating electrical machine, the other ends of the teeth cores 22 are engaged with the projections of the tool 52, thereby fixing the other ends of the teeth cores 22 to the external periphery of the tool 52. Processes thereafter are identical to those explained with reference to FIG. 7, and thus explanations thereof will be omitted.

As explained above, according to the second embodiment, the yoke core 21 is formed after the teeth cores 22 are provided on the external periphery of the tool 51 or the tool 52. Therefore, according to the second embodiment, roundness of a circle formed by the other ends of the teeth cores 22 becomes higher than that when one ends of the teeth cores 22 are inserted into the engaging trenches 211 as explained in the first embodiment. As a result, in the second embodiment, occurrence of cogging torques, torque ripples, and speed ripples attributable to roundness of the circle can be suppressed. In the second embodiment, manufacturing becomes easy by using the tool 51 or the tool 52. In the second embodiment, because the band-shaped steel sheets 31 are bent in a circular shape and are stacked while engaging the notches 311 of the band-shaped steel sheets 31 with one ends of the teeth cores 22 and fixing the notches 311, shrink fitting is not necessary.

In the first and second embodiments described above, it has been explained that the rotor 1 is rotated by a rotating magnetic field that is generated by the windings 23 and that rotating electrical machines are electric motor drives. However, the rotating electrical machines according to the first and second embodiments are not limited to electric motor drives, and can be power generators.

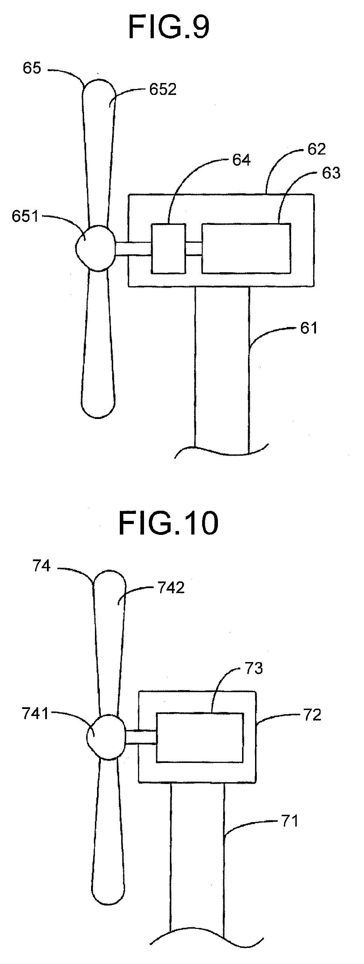

Further, the rotating electrical machines according to the first and second embodiments can be applied to an electric motor drive of vehicles or an AC servomotor. For example, the rotating electrical machines according to the first and second embodiments can be also applied to a power generator for a wind power generator system or vehicles. An example that the rotating electrical machines according to the first and second embodiments are applied to a power generator for a wind power generator system is explained below with reference to FIGS. 9 and 10. FIG. 9 depicts an outline of a wind power generator system including a speed increasing gear and a power generator. FIG. 10 depicts an outline of a direct-drive wind power generator system from which a speed increasing gear is omitted.

The wind power generator system shown in FIG. 9 mainly includes a tower 61, a nacelle 62, a power generator 63, a speed increasing gear 64, and a windmill 65. The nacelle 62 is provided on the tower 61. The power generator 63 and the speed increasing gear 64 are provided in the nacelle 62. The power generator 63 is one of the rotating electrical machines according to the first and second embodiments. The windmill 65 is configured by a rotor hub 651 and a blade 652, and is connected to the power generator 63 via the speed increasing gear 64. Rotation speed of the windmill 65 is increased by the speed increasing gear 64, and rotation is transmitted to the power generator 63. The wind power generator system shown in FIG. 10 mainly includes a tower 71, a nacelle 72, a power generator 73, and a windmill 74. The nacelle 72 is provided on the tower 71. The power generator 73 is provided in the nacelle 72. The power generator 73 is one of the rotating electrical machines according to the first and second embodiments. The windmill 74 is configured by a rotor hub 741 and a blade 742, and is connected to the power generator 73.

According to the wind power generator system described above, when a power generation capacity is large (for example, when a power generation capacity is several megawatts), both the power generators 63 and 73 shown in FIGS. 9 and 10 become large. When the rotating electrical machines according to the first and second embodiments are applied to these large power generators, effects of the first and second embodiments become more significant.

The configuration of the wind power generator system is not limited to those shown in FIGS. 9 and 10, and other configurations can be also employed.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A rotating electrical machine comprising a rotor (1) and a stator (2) that surrounds the rotor (1), wherein
the stator (2) comprises:
a yoke core (21) that is obtained by bending band-shaped non-directional magnetic steel sheets (31) in a circular shape and stacking the bent band-shaped non-directional magnetic steel sheets (31) ,or is obtained by bending a band-shaped non-directional magnetic steel sheet (31) in a circular spiral shape,; and
a plurality of teeth cores (22) that are arranged in a peripheral direction of the yoke core 21, with one ends of the teeth cores (22) fixed to an internal peripheral side of the yoke core (21), and with the other ends of the teeth cores (22) set opposite to the rotor (1), and
the teeth cores (22) are configured by stacking directional magnetic steel sheets (4), and the teeth cores (22) are independent of each other.

2. The rotating electrical machine according to claim 1, wherein
the one ends of the teeth cores (22) have
tapered parts (221) of which widths in a peripheral direction become small from an internal peripheral surface of the yoke core (21) toward a yoke core (21) side, and
cylindrical parts (222) that are formed at the yoke core (21) side of the tapered parts (221) and of which widths in a peripheral direction are larger than widths in a peripheral direction of front ends of the tapered parts (221) at the yoke core (21) side,
engaging trenches (211) that are provided corresponding to the teeth cores (22) and have shapes in which the engaging trenches (211) can be engaged with the one ends of the teeth cores (22) that correspond to the engaging trenches (211) are formed at the internal peripheral side of the yoke core (21), and
the one ends of the teeth cores (22) are fixed to the internal peripheral side of the yoke core (21) by being engaged with the engaging trenches (211) that correspond to the one ends of the teeth cores (22).

3. The rotating electrical machine according to claim 1 or 2, wherein an easy direction of magnetization of each teeth core (22) coincides with a radial direction of the yoke core (21).

4. A manufacturing method of a rotating electrical machine including a rotor (1) and a stator (2) that surrounds the rotor (1), the method comprising:
a first step of punching out band-shaped steel sheets (31) or a band-shaped steel sheet (31) from a non-directional magnetic steel sheet (3);
a second step of bending the band-shaped steel sheets (31) in a circular shape, and stacking the bent band-shaped steel sheets (31), or bending the band-shaped steel sheet (31) in a circular spiral shape, thereby forming a yoke core (21) of the stator (2);
a third step of punching out teeth steel sheets (41) from a directional magnetic steel sheet (4);
a fourth step of forming a plurality of teeth cores (22) of the stator that are independent of each other by repeating an operation of forming one teeth core (22) of the stator (2) by stacking the teeth sheets (41); and
a fifth step of fixing one ends of the teeth cores (22) to an internal peripheral side of the yoke core (21).

5. The manufacturing method of a rotating electrical machine according to claim 4, wherein an easy direction of magnetization of each teeth core (22) coincides with a radial direction of the yoke core (21).

6. The manufacturing method of a rotating electrical machine according to claim 4 or 5, wherein at the third step, the teeth steel sheets (41) are sequentially punched out along an easy direction of magnetization of the directional magnetic steel sheet (4).

7. The manufacturing method of a rotating electrical machine according to claim 4, wherein
the one ends of the teeth cores (22) have
tapered parts (221) of which widths in a peripheral direction become small from the internal peripheral surface of the yoke core (21) toward a yoke core (21) side, and
cylindrical parts (222) that are formed at the yoke core (21) side of the tapered parts (221) and of which widths in a peripheral direction are larger than widths in a peripheral direction of front ends of the tapered parts (221) at the yoke core (21) side,
engaging trenches (211) that are provided corresponding to the teeth cores (22) and have shapes in which the engaging trenches (211) can be engaged with the one ends of the teeth cores (22) that correspond to the engaging trenches (211) are formed at the internal peripheral side of the yoke core (21), and
at the fifth step, the one ends of the teeth cores (22) are fixed to the internal peripheral side of the yoke core (21) by being inserted from an end surface of the yoke core (21) in a stacking direction into the engaging trenches (211) that correspond to the one ends of the teeth cores (22).

8. A manufacturing method of a rotating electrical machine including a rotor (1) and a stator (2) that surrounds the rotor (1), the method comprising:
a first step of punching out teeth steel sheets (41) from a directional magnetic steel sheet (4);
a second step of forming a plurality of teeth cores (22) of the stator that are independent of each other by repeating an operation of forming one teeth core (22) of the stator (2) by stacking the teeth sheets (41);
a third step of fixing one ends of the teeth cores (22) to an external periphery of a tool (51) having a cylindrical or columnar shape;
a fourth step of punching out band-shaped steel sheets (31) or a band-shaped steel sheet (31) from a non-directional magnetic steel sheet (3); and
a fifth step of forming a yoke core (21) of the stator (2) by bending the band-shaped steel sheets (31) in a circular shape and stacking the bent band-shaped steel sheets (31) or by bending the band-shaped steel sheet (31) in a circular spiral shape, while fixing the band-shaped steel sheets (31) or the band-shaped steel sheet (31) to the other ends of the teeth cores (22) of which the one ends are fixed to the external periphery of the tool (51).

9. The manufacturing method of a rotating electrical machine according to claim 8, wherein an easy direction of magnetization of each teeth core (22) coincides with a radial direction of the yoke core (21).

10. The manufacturing method of a rotating electrical machine according to claim 8 or 9, wherein at the first step, the teeth steel sheets (41) are sequentially punched out along an easy direction of magnetization of the directional magnetic steel sheet (4).

11. The manufacturing method of a rotating electrical machine according to claim 8, wherein
the other ends of the teeth cores (22) have
tapered parts (221) of which widths in a peripheral direction become small from an internal peripheral surface of the yoke core (21) toward a yoke core (21) side, and
cylindrical parts (222) that are formed at the yoke core (21) side of the tapered parts (221) and of which widths in a peripheral direction are larger than widths in a peripheral direction of front ends of the tapered parts (221) at the yoke core (21) side,
engaging trenches (211) that are provided corresponding to the teeth cores (22) and have shapes in which the engaging trenches (211) can be engaged with the other ends of the teeth cores (22) that correspond to the engaging trenches (211) are formed at an internal peripheral side of the yoke core (21), and
at the fifth step, the band-shaped steel sheets (31) are fixed to the other ends of the teeth cores (22) by engaging the other ends of the teeth cores (22) with the engaging trenches (211) that are formed on the band-shaped steel sheets (31).

12. A wind power generator system comprising a rotating electrical machine including a rotor (1) and a stator (2) that surrounds the rotor (1), wherein
the stator (2) includes:
a yoke core (21) that is obtained by bending band-shaped non-directional magnetic steel sheets (31) in a circular shape and stacking the bent band-shaped non-directional magnetic steel sheets (31), or is obtained by bending a band-shaped non-directional magnetic steel sheet (31) in a circular spiral shape; and
a plurality of teeth cores (22) that are arranged in a peripheral direction of the yoke core 21, with one ends of the teeth cores (22) fixed to an internal peripheral side of the yoke core (21), and with the other ends of the teeth cores (22) set opposite to the rotor (1), and
the teeth cores (22) are configured by stacking directional magnetic steel sheets (4), and the teeth cores (22) are independent of each other.

13. The wind power generator system according to claim 12, comprising:
a tower (61);
a nacelle (62) that is provided on the tower (61);
the rotating electrical machine that is provided in the nacelle (62); and
a windmill (65) that is directly or indirectly connected to the rotating electrical machine.

14. The wind power generator system according to claim 12, wherein
the one ends of the teeth cores (22) have
tapered parts (221) of which widths in a peripheral direction become small from an internal peripheral surface of the yoke core (21) toward a yoke core (21) side, and
cylindrical parts (222) that are formed at the yoke core (21) side of the tapered parts (221) and of which widths in a peripheral direction are larger than widths in a peripheral direction of front ends of the tapered parts (221) at the yoke core (21) side,
engaging trenches (211) that are provided corresponding to the teeth cores (22) and have shapes in which the engaging trenches (211) can be engaged with the one ends of the teeth cores (22) that correspond to the engaging trenches (211) are formed at the internal peripheral side of the yoke core (21), and
the one ends of the teeth cores (22) are fixed to the internal peripheral side of the yoke core (21) by being engaged with the engaging trenches (211) that correspond to the one ends of the teeth cores (22).
